# EUROPEAN PATENT APPLICATION

(11) **EP 4 539 208 A1**
(43) Date of publication of application: **16.04.2025**
(21) Application number: 23203484.3
(22) Date of filing: 13.10.2023
(51) Int. Cl.: H01M 10/653, H01M 50/209, H01M 10/647, H01M 10/659, H01M 10/6555, H01M 50/291, H01M 50/293, H01M 10/625

(54) **A MODULE FRAME FOR A BATTERY MODULE**

(71) Applicant: VOLVO TRUCK CORPORATION, 405 08 Göteborg (SE)
(72) Inventor: Höglund, Nils, 417 08 Göteborg (SE); Jaberi Darbandi, Azad, 433 45 Partille (SE); Lindelöw, Fredrik, 541 94 Skövde (SE); Tingberg, Tobias, 433 47 Partille (SE)
(74) Representative: Valea AB

(57) **Abstract**

The present disclosure relates to a module frame (24) for a battery module (22), the module frame (24) being adapted to accommodate at least a first cell stack (26) comprising two or more battery cells (26', 26") and a second cell stack (28) comprising two or more battery cells (28', 28"), the module frame (24) comprising a partition member (30) adapted to at least partially partition the module frame (24) into a first module frame area (32), adapted to accommodate the first cell stack (26), and a second module frame area (34), adapted to accommodate the second cell stack (28), the partition member (30) comprising a partition member wall assembly (36) at least partially enclosing a closed partition member cavity (38), the module frame (24) comprising a heat absorbing agent (40) accommodated by the partition member cavity (38).

## Description

### TECHNICAL FIELD

The disclosure relates generally to a module frame. In particular aspects, the disclosure relates to a module frame for a battery module. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can also be applied in other types of vehicles, such as marine vessels, or stationary systems.

### BACKGROUND

A battery module frame may be adapted to accommodate a plurality of cell stacks. Each cell stack may comprise a plurality of battery cells. However, there is a risk that the battery cells of a cell stack may enter a so-called thermal runaway state being an uncontrollable, self-heating state. The present disclosure aims at mitigating the consequences of such a thermal runaway state.

### SUMMARY

According to a first aspect of the disclosure, there is provided a module frame for a battery module. The module frame is adapted to accommodate at least a first cell stack comprising two or more battery cells and a second cell stack comprising two or more battery cells. The module frame comprises a partition member adapted to at least partially partition the module frame into a first module frame area, adapted to accommodate the first cell stack, and a second module frame area, adapted to accommodate the second cell stack. The partition member comprises a partition member wall assembly at least partially enclosing a closed partition member cavity. The module frame comprises a heat absorbing agent accommodated by the partition member cavity. The first aspect of the disclosure may seek to mitigate the consequences of a thermal runaway state entering one of the first and second cell stacks. A technical benefit may include that the partition member may be used for such a mitigation.

To this end, it should be noted that a module frame may comprise a partition member for other purposes than for thermal runaway mitigation. Purely by way of example, the partition member may be used in order to arrive at a module frame with an appropriate structural integrity. As such, the partition member may be used for the dual purpose of ensuring appropriate structural integrity as well as appropriate thermal runaway mitigation capabilities.

Optionally in some examples, including in at least one preferred example, the heat absorbing agent is adapted to undergo a phase change from solid state to liquid state at a solid phase to liquid phase change temperature of the heat absorbing agent, preferably the solid phase to liquid phase change temperature is in the range of 50°C - 150°C. A technical benefit may include that the phase change from solid state to liquid state may absorb an appropriate amount of energy.

Optionally in some examples, including in at least one preferred example, the heat absorbing agent is adapted to undergo a phase change from liquid state to gas state at a liquid phase to gas phase change temperature of the heat absorbing agent, preferably the liquid phase to gas phase change temperature is in the range of 50°C - 150°C. A technical benefit may include that the phase change from liquid state to gas state may absorb an appropriate amount of energy.

Optionally in some examples, including in at least one preferred example, the heat absorbing agent comprises at least one of the following: a fluorinated liquid, a silicone oil, water, ethylene glycol and a hydrogel. A technical benefit may include that one or more of the agent examples presented hereinabove may absorb an appropriate amount of energy.

Optionally in some examples, including in at least one preferred example, the module frame comprises a pressure relief valve adapted to fluidly connect the partition member cavity to the environment ambient of the partition member when a pressure in the partition member cavity exceeds a predetermined pressure. A technical benefit may include that a pressure in the closed partition member cavity during or after the heat absorbing agent absorbs heat, e.g. by a phase change, may be kept appropriately low.

Optionally in some examples, including in at least one preferred example, the partition member comprises a partition member housing at least partially enclosing the partition member cavity, preferably the partition member housing comprises or is made of metal. A technical benefit may include that the housing may provide appropriate structural strength to the partition member and thus to the module frame.

Optionally in some examples, including in at least one preferred example, the partition member wall assembly at least partially delimits the closed partition member cavity. A technical benefit may include that the closed partition member cavity may be formed by appropriately few components.

According to a second aspect of the disclosure, there is provided a module frame for a battery module. The module frame is adapted to accommodate at least a first cell stack comprising two or more battery cells and a second cell stack comprising two or more battery cells. The module frame comprises a partition member adapted to at least partially partition the module frame into a first module frame area, adapted to accommodate the first cell stack, and a second module frame area, adapted to accommodate the second cell stack. The partition member comprises a partition member conduit for a cooling fluid. The module frame comprises a thermal runaway detector adapted to detect a predicted or occurring thermal runaway in at least one of the first cell stack and the second cell stack, and a valve assembly comprising at least one valve. The valve assembly is adapted to allow a flow of fluid through the partition member conduit in response to a thermal runaway signal issued by the thermal runaway detector. The second aspect of the disclosure may seek to mitigate the consequences of a thermal runaway state entering one of the first and second cell stacks. A technical benefit may include that the partition member may be used for such a mitigation.

Optionally in some examples, including in at least one preferred example, the valve assembly is adapted to prevent a flow of fluid through the partition member conduit when no thermal runaway signal is issued by the thermal runaway detector. A technical benefit may include that battery cells of at least one of the first cell stack and the second cell stack are not excessively cooled during normal use.

Optionally in some examples, including in at least one preferred example, the thermal runaway detector is adapted to detect at least one if the following entities associated with at least one of the first cell stack and the second cell stack: temperature, voltage and pressure. A technical benefit may include an appropriate way for detecting thermal runaway.

Optionally in some examples, including in at least one preferred example, the partition member comprises a partition member housing at least partially enclosing the partition member conduit, preferably the partition member housing comprises or is made of metal. A technical benefit may include that the housing may provide appropriate structural strength to the partition member and thus to the module frame.

Optionally in some examples, including in at least one preferred example, the partition member forms part of a first delimiting assembly delimiting the first module frame area, preferably the partition member also forms part of a second delimiting assembly delimiting the second module frame area. A technical benefit may include that the partition member may be used for delimiting the first and second module frame areas and also mitigate the consequences of a thermal runaway state starting in one of the first and second cell stacks.

Optionally in some examples, including in at least one preferred example, the module frame comprises a set of beams delimiting an interior storage area of the module frame, the interior storage area comprising the first module frame area and second module frame area, the partition member being connected to and extending from at least one beam of the set of beams. A technical benefit may include that the partition member may be used for ensuring the structural integrity of the module frame and also mitigate the consequences of a thermal runaway state starting in one of the first and second cell stacks.

Optionally in some examples, including in at least one preferred example, the partition member is connected to and extends from at least one connecting beam of the set of beams such that a partition member longitudinal axis of the partition member forms an angle with a longitudinal connecting beam axle of the connecting beam such that the angle is in the range of 60 - 120°, preferably in the range of 80 - 100°. A technical benefit may include that the partition member may be used for ensuring the structural integrity of the module frame and also mitigate the consequences of a thermal runaway state starting in one of the first and second cell stacks.

Optionally in some examples, including in at least one preferred example, the set of beams comprises four beams forming a rectangle enclosing each one of the first module frame area and the second module frame area. A technical benefit may include that the partition member may be used for ensuring the structural integrity of the module frame and also mitigate the consequences of a thermal runaway state starting in one of the first and second cell stacks.

Optionally in some examples, including in at least one preferred example, the connecting beam forms part of the four beams forming a rectangle. A technical benefit may include that the partition member may be used for ensuring the structural integrity of the module frame and also mitigate the consequences of a thermal runaway state starting in one of the first and second cell stacks.

According to a third aspect of the disclosure, there is provided a battery module comprising a module frame according to one of the first and second third aspects of the disclosure. The battery module further comprises a first cell stack comprising two or more battery cells and a second cell stack comprising two or more battery cells. The first cell stack is located in the first module frame area and the second cell stack is located in the second module frame area. The first cell stack and the second cell stack are separated by the partition member. The second aspect of the disclosure may seek to mitigate the consequences of a thermal runaway state entering one of the first and second cell stacks. A technical benefit may include that the partition member may be used for such a mitigation.

Optionally in some examples, including in at least one preferred example, the partition member separates at least two battery cells of the first cell stack from at least two battery cells of the second cell stack. A technical benefit may include that the partition member may be used for ensuring the structural integrity of the module frame and also mitigate the consequences of a thermal runaway state entering one of the first and second cell stacks. Here, the partition member may prevent that a thermal runaway state starting in one of the first and second cell stacks progresses to the other cell stack.

Optionally in some examples, including in at least one preferred example, each battery cell of the first cell stack is associated with a maximum operation temperature. The solid phase to liquid phase change temperature is greater than the maximum operation temperature, preferably the solid phase to liquid phase change temperature is in a temperature range between the maximum operation temperature and 150°C. A technical benefit may include that the heat absorbing agent may be used for absorbing heat developed during a thermal runaway state.

Optionally in some examples, including in at least one preferred example, each battery cell of the first cell stack is associated with a maximum operation temperature. The liquid phase to gas phase change temperature is greater than the maximum operation temperature, preferably the liquid phase to gas phase change temperature is in a temperature range between the maximum operation temperature and 150°C. A technical benefit may include that the heat absorbing agent may be used for absorbing heat developed during a thermal runaway state.

According to a fourth aspect of the disclosure, there is provided a vehicle comprising a module frame of any one of the first and second aspects of the disclosure or a battery module according to the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary perspective view of a battery module according to an example.
**FIG. 3** is an exemplary perspective, partially cross-sectional, view of a battery module according to an example.
**FIG. 4** is an exemplary top view of a module frame according to an example.
**FIG. 5** is an exemplary top view of a module frame according to an example.
**FIG. 6** is an exemplary top view of a module frame according to an example.

### DETAILED DESCRIPTION

The detailed description set forth below provides information and examples of the disclosed technology with sufficient detail to enable those skilled in the art to practice the disclosure.

A vehicle may comprise an energy storage assembly for storing electric energy to be used by one or more consumers of electric power, such as one or more electric motors for propulsion of the electric vehicle. Purely by way of example, a vehicle that comprises an energy storage assembly may be any one of a battery-powered electric vehicle BEV, a hybrid electric vehicle HEV, a plug-in hybrid electric vehicle PHEV and fuel cell electric vehicle, i.e. a vehicle comprising a battery and a fuel cell.

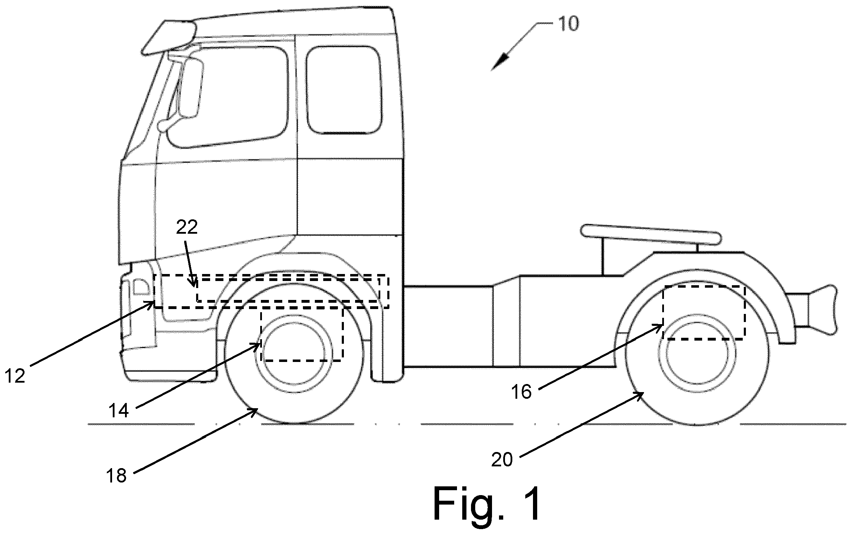

**FIG. 1** is an example of the present disclosure, comprising a side view of a vehicle 10, in the form of a truck, according to an example.

Whilst the shown example illustrates a truck, the disclosure may relate to any vehicle, such as a car, bus, industrial vehicle, boat, ship, etc., wherein motive power may be derived from an electric motor.

The vehicle 10 comprises an energy storage assembly 12. Purely by way of example, the energy storage assembly 12 may be connected to one or more electric motors 14, 16 for propelling the vehicle 10. In the **FIG. 1** example, the vehicle 10 comprises a first electric motor 14 connected to a first ground engaging member 18. Moreover, though purely by way of example, the **FIG. 1** vehicle 10 also comprises a second electric motor 16 connected to a second ground engaging member 20. The energy storage assembly 12 may comprise one or more battery modules 22 as will be presented further hereinbelow.

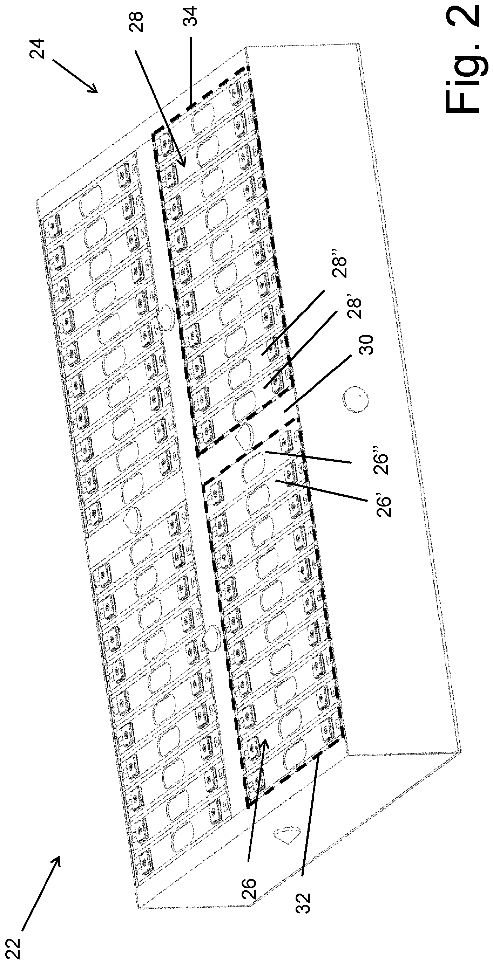

**FIG. 2** is exemplary perspective view of a battery module 22 according to an example. The battery module 22 comprises a module frame 24 as will be presented hereinbelow. The battery module 22 further comprises a first cell stack 26 comprising two or more battery cells 26', 26" and a second cell stack 28 comprising two or more battery cells 28', 28". In the example illustrated in **FIG. 2****,** each one of the first and second cell stacks 26, 28 comprises ten battery cells. However, it is envisaged that in other examples of the battery module 22, each one of the first and second cell stacks 26, 28 may comprise other numbers of battery cells.

**FIG. 2** also illustrates the module frame 24 for a battery module 22. As indicated in **FIG. 2****,** the module frame 24 is adapted to accommodate at least a first cell stack 26 comprising two or more battery cells 26', 26" and a second cell stack 28 comprising two or more battery cells 28', 28". The module frame 24 comprises a partition member 30 adapted to at least partially partition the module frame 24 into a first module frame area 32, adapted to accommodate the first cell stack 26, and a second module frame area 34, adapted to accommodate the second cell stack 28. In the **FIG. 2** example of the battery module 22, the first cell stack 26 is located in the first module frame area 32 and the second cell stack 28 is located in the second module frame area 34. As such, in the **FIG. 2** example, the first cell stack and the second cell stack are separated by the partition member 30.

As a non-limiting example, the partition member 30 may be used in order to arrive at a module frame 24 with an appropriate structural integrity. Purely by way of example, the partition member 30 may extend across the width of the module frame 24 and may thus be referred to as a cross-beam.

Moreover, as indicated in **FIG. 2****,** the partition member 30 may separate at least two battery cells 26', 26" of the first cell stack 26 from at least two battery cells 28', 28" of the second cell stack 28.

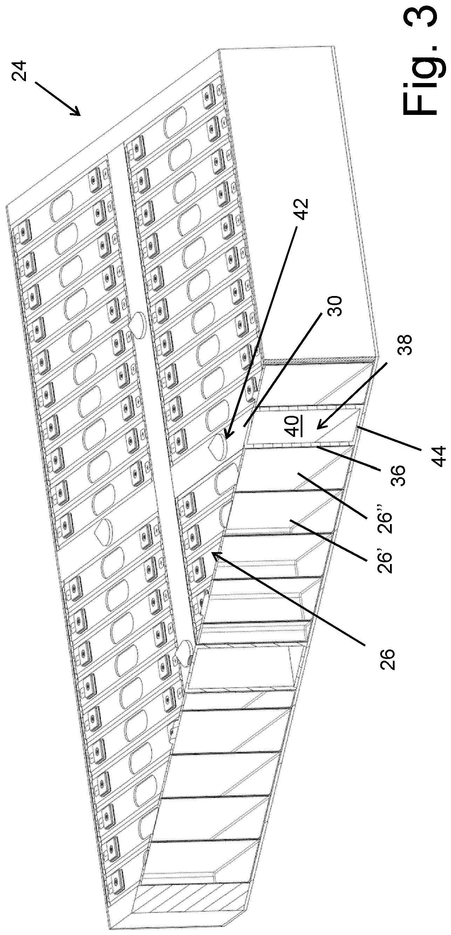

As indicated in **FIG. 3****,** the partition member 30 comprises a partition member wall assembly 36 at least partially enclosing a closed partition member cavity 38. The module frame 24 comprises a heat absorbing agent 40 accommodated by the partition member cavity 38. As such, the heat absorbing agent 40 in the **FIG. 3** example forms part of the module frame 24.

As a non-limiting example, the heat absorbing agent 40 may be adapted to undergo a phase change from solid state to liquid state at a solid phase to liquid phase change temperature of the heat absorbing agent. As a non-limiting example, the solid phase to liquid phase change temperature may be in the range of 50°C - 150°C. As a further non-limiting example, each battery cell 26', 26" of the first cell stack 26 is associated with a maximum operation temperature. The solid phase to liquid phase change temperature may be greater than the maximum operation temperature, preferably the solid phase to liquid phase change temperature is in a temperature range between the maximum operation temperature and 150°C. Purely by way of example, the heat absorbing agent 40 may be adapted to undergo a phase change from solid state to liquid state may comprise or even be constituted by a wax.

As another non-limiting example, the heat absorbing agent 40 may be adapted to undergo a phase change from liquid state to gas state at a liquid phase to gas phase change temperature of the heat absorbing agent. As a non-limiting example, the liquid phase to gas phase change temperature may be in the range of 50°C - 150°C. Purely by way of example, each battery cell 26', 26" of the first cell stack 26 is associated with a maximum operation temperature. The liquid phase to gas phase change temperature is greater than the maximum operation temperature. Purely by way of example, the liquid phase to gas phase change temperature is in a temperature range between the maximum operation temperature and 150°C.

As non-limiting example, the heat absorbing agent 40 may comprise at least one of the following: a fluorinated liquid, a silicone oil, water, ethylene glycol and a hydrogel. By way of example only, the heat absorbing agent 40 may comprise a mix of water and ethylene glycol.

Moreover, as indicated in the **FIG. 3** example, the module frame 24 may comprise a pressure relief valve 42 adapted to fluidly connect the partition member cavity 38 to the environment ambient of the partition member 30 when a pressure in the partition member cavity 38 exceeds a predetermined pressure. In the example illustrated in **FIG. 3****,** the pressure relief valve 42 is located on a portion of the partition member 30.

Furthermore, again with reference to **FIG. 3****,** the partition member 30 may comprise a partition member housing 44 at least partially enclosing the partition member cavity 38. The partition member housing 44 may in turn be enclosing the partition member wall assembly 36. However, as indicated in **FIG. 3****,** the partition member wall assembly 36 may form part of the partition member housing 44. As a non-limiting example, the partition member housing 44 comprises or is made of metal, such as aluminium.

Furthermore, again as indicated in **FIG. 3****,** as a non-limiting example, the partition member wall assembly 36 at least partially delimits the closed partition member cavity 38. As such, though purely by way of example, the partition member wall assembly 36 may comprise wall members that define the closed partition member cavity 38. However, it is also envisaged that other examples of the module frame 24 may comprise another type of delimiter, such as a flexible bag (not shown), which is located within a space (not shown) defined by the partition member wall assembly 36.

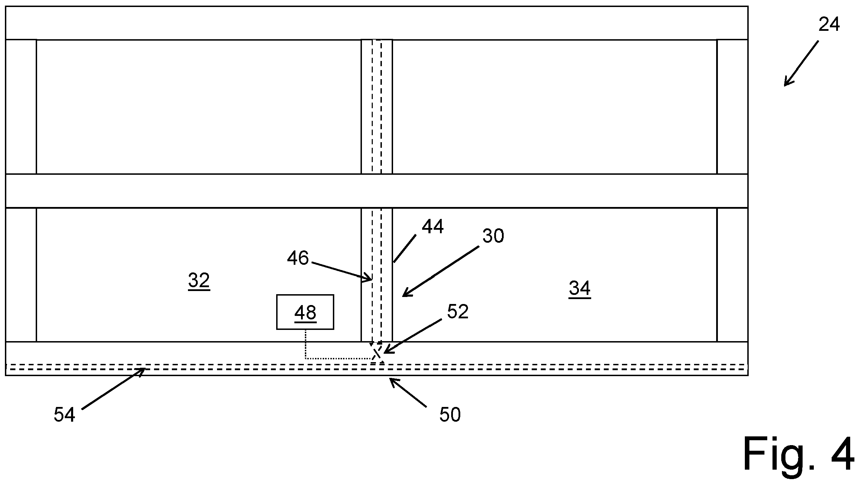

**FIG. 4** illustrates another example of the disclosure. To this end, **FIG. 4** is a top view of a module frame 24 for a battery module. The module frame 24 is adapted to accommodate at least a first cell stack 26 (see e.g. **FIG. 2****)** comprising two or more battery cells and a second cell stack 28 (see e.g. **FIG. 2**) comprising two or more battery cells. The module frame comprises a partition member 30 adapted to at least partially partition the module frame into a first module frame area 32, adapted to accommodate the first cell stack, and a second module frame area 34, adapted to accommodate the second cell stack. The partition member comprises a partition member conduit 46 for a cooling fluid. The module frame 24 further comprises a thermal runway detector 48 adapted to detect a predicted or occurring thermal runway in at least one of the first cell stack and the second cell stack, and a valve assembly 50 comprising at least one valve 52.

The valve assembly 48 is adapted to allow a flow of fluid through the partition member conduit 44 in response to a thermal runaway signal issued by the thermal runaway detector 48. To this end, and as indicated by dotted lines in **FIG. 4****,** the thermal runaway detector 48 may be in signal transmitting communication with a portion of the valve assembly 50, such as the least one valve 52. Purely by way of example, the least one valve 52 may be located between a cooling feeding conduit 54 and the partition member conduit 46, as seen in a direction of flow from the cooling feeding conduit 54 to the partition member conduit 46.

Moreover, though purely by way of example, the valve assembly 50 may be adapted to prevent a flow of fluid through the partition member conduit 46 when no thermal runaway signal is issued by the thermal runaway detector.

As a non-limiting example, the thermal runaway detector 48 may be adapted to detect at least one if the following entities associated with at least one of the first cell stack 32 and the second cell stack 34: temperature, voltage and pressure. To this end, by way of example only, the thermal runaway detector 48 may comprise at least one of the following: a temperature sensor (not shown), a voltage sensor (not shown) and pressure sensor (not shown).

Moreover, again with reference to **FIG. 4** though purely by way of example, the partition member 30 may comprise a partition member housing 44 at least partially enclosing the partition member conduit 46. As a non-limiting example, the partition member housing comprises or is made of metal, such as aluminium.

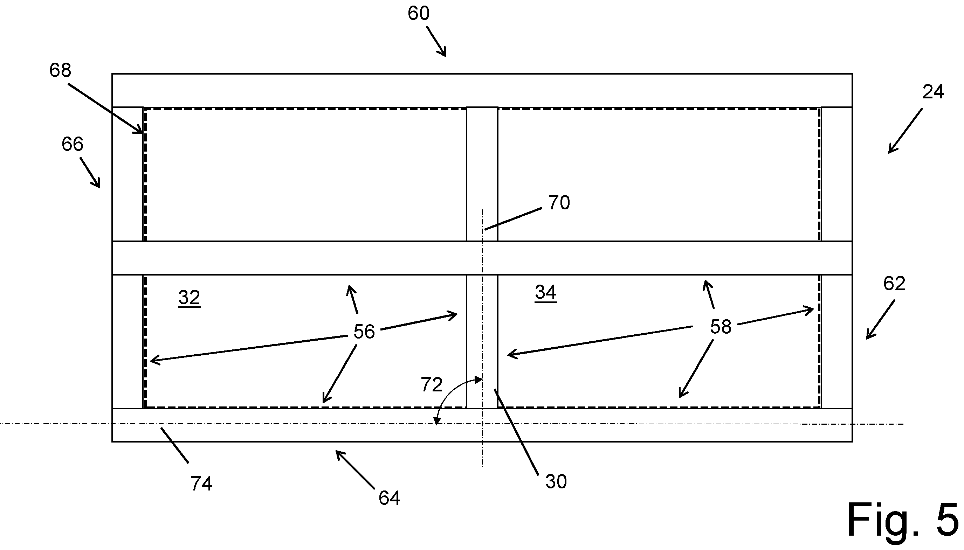

Reference is now made to **FIG. 5****,** illustrating a module frame 24 according to the present disclosure. Characteristics of the module frame 24 as presented hereinbelow may be applicable to any example of the first aspect of the disclosure, as exemplified in hereinabove with reference to **FIG. 3** for example, or the second aspect of the disclosure, as exemplified in hereinabove with reference to **FIG. 3** for example.

As may be gleaned from **FIG. 5****,** though purely by way of example, the partition member 30 may form part of a first delimiting assembly 56 delimiting the first module frame area 32. Moreover, as indicated in **FIG. 5****,** the partition member 30 may also form part of a second delimiting assembly 58 delimiting the second module frame area 34. As such, the partition member 30 may form pear of each one of the first and the second delimiting assemblies 56, 58 such that the first and the second delimiting assemblies 56, 58 share the partition member 30.

Furthermore, as indicated in **FIG. 5****,** the module frame 24 may comprise a set of beams 60, 62, 64, 66 delimiting an interior storage area 68 of the module frame 24. The interior storage area 68 comprises the first module frame area 32 and the second module frame area 34. Moreover, as indicated in the **FIG. 5** example, the partition member 30 is connected to and extends from at least one beam 64 of the set of beams 60, 62, 64, 66. As a non-limiting example, the partition member 30 may be connected to the at least one beam 64 by means of a bolt joint (not shown). Purely by way of example, and as indicated in the **FIG. 5** example, the set of beams 60, 62, 64, 66 comprises four beams 60, 62, 64, 66 forming a rectangle enclosing each one of the first module frame area 32 and the second module frame area 34.

Moreover, again with reference to **FIG. 5****,** the partition member 30 may be connected to and extend from at least one connecting beam 64 of the set of beams 60, 62, 64, 66 such that a partition member longitudinal axis 70 of the partition member 30 forms an angle 72 with a longitudinal connecting beam axle 74 of the connecting beam 64 such that the angle is in the range of 60 - 120°, preferably in the range of 80 - 100°.

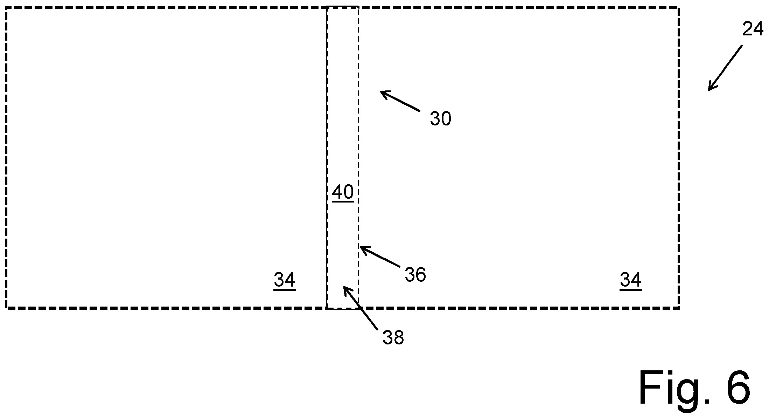

**FIG. 6** illustrates a module frame 24 for a battery module, the module frame 24 being adapted to accommodate at least a first cell stack (not shown in **FIG. 6**) comprising two or more battery cells (not shown in **FIG. 6**) and a second cell stack (not shown in **FIG. 6**) comprising two or more battery cells (not shown in **FIG. 6**)**.** The module frame 24 comprises a partition member 30 adapted to at least partially partition the module frame 24 into a first module frame area 32, adapted to accommodate the first cell stack (not shown in **FIG. 6**)**,** and a second module frame area 34, adapted to accommodate the second cell stack (not shown in **FIG. 6**). The partition member 30 comprises a partition member wall assembly 36 at least partially enclosing a closed partition member cavity 38. The module frame 24 comprises a heat absorbing agent 40 accommodated by the partition member cavity 38.

Examples of the present disclosure are presented hereinbelow.

Example 1: A module frame 24 for a battery module 22, the module frame 24 being adapted to accommodate at least a first cell stack 26 comprising two or more battery cells 26', 26" and a second cell stack 28 comprising two or more battery cells 28', 28", the module frame 24 comprising a partition member 30 adapted to at least partially partition the module frame 24 into a first module frame area 32, adapted to accommodate the first cell stack 26, and a second module frame area 34, adapted to accommodate the second cell stack 28, the partition member 30 comprising a partition member wall assembly 36 at least partially enclosing a closed partition member cavity 38, the module frame 24 comprising a heat absorbing agent 40 accommodated by the partition member cavity 38.

Example 2: The module frame 24 of example 1, wherein the heat absorbing agent 40 is adapted to undergo a phase change from solid state to liquid state at a solid phase to liquid phase change temperature of the heat absorbing agent 40, preferably the solid phase to liquid phase change temperature is in the range of 50°C - 150°C.

Example 3: The module frame 24 of example 1, wherein the heat absorbing agent 40 is adapted to undergo a phase change from liquid state to gas state at a liquid phase to gas phase change temperature of the heat absorbing agent 40, preferably the liquid phase to gas phase change temperature is in the range of 50°C - 150°C.

Example 4: The module frame 24 of any one of the preceding examples, wherein the heat absorbing agent 40 comprises at least one of the following: a fluorinated liquid, a silicone oil, water, ethylene glycol and a hydrogel.

Example 5: The module frame 24 of any one of the preceding examples, wherein the module frame 24 comprises a pressure relief valve 42 adapted to fluidly connect the partition member cavity 38 to the environment ambient of the partition member 30 when a pressure in the partition member cavity 38 exceeds a predetermined pressure.

Example 6: The module frame 24 of any one of the preceding examples, wherein the partition member 30 comprises a partition member housing 44 at least partially enclosing the partition member cavity 38, preferably the partition member housing 44 comprises or is made of metal.

Example 7: The module frame 24 of any one of the preceding examples, wherein the partition member wall assembly 36 at least partially delimits the closed partition member cavity 38.

Example 8: A module frame 24 for a battery module 22, the module frame 24 being adapted to accommodate at least a first cell stack 26 comprising two or more battery cells and a second cell stack 28 comprising two or more battery cells, the module frame 24 comprising a partition member 30 adapted to at least partially partition the module frame 24 into a first module frame area 32, adapted to accommodate the first cell stack 26, and a second module frame area 34, adapted to accommodate the second cell stack 28, the partition member 30 comprising a partition member conduit 46 for a cooling fluid, the module frame 24 comprising a thermal runaway detector 48 adapted to detect a predicted or occurring thermal runaway in at least one of the first cell stack 26 and the second cell stack 28, and a valve assembly 50 comprising at least one valve 52, the valve assembly being adapted to allow a flow of fluid through the partition member conduit 46 in response to a thermal runaway signal issued by the thermal runaway detector 48.

Example 9: The module frame 24 of example 8, where the valve assembly 50 is adapted to prevent a flow of fluid through the partition member conduit 46 when no thermal runaway signal is issued by the thermal runaway detector 48.

Example 10: The module frame 24 of example 8 or example 9, wherein the thermal runaway detector 48 is adapted to detect at least one if the following entities associated with at least one of the first cell stack 26 and the second cell stack 28: temperature, voltage and pressure.

Example 11: The module frame 24 of any one of examples 8 - 10, wherein the partition member 30 comprises a partition member housing 44 at least partially enclosing the partition member 30 conduit, preferably the partition member housing 44 comprises or is made of metal.

Example 12: The module frame 24 of any one of the preceding examples, wherein the partition member 30 forms part of a first delimiting assembly 56 delimiting the first module frame area 32, preferably the partition member 30 also forms part of a second delimiting assembly 58 delimiting the second module frame area 34.

Example 13: The module frame 24 of any one of the preceding examples, wherein the module frame 24 comprises a set of beams 60, 62, 64, 66 delimiting an interior storage area of the module frame 24, the interior storage area comprising the first module frame area 32 and second module frame area 34, the partition member 30 being connected to and extending from at least one beam 64 of the set of beams 60, 62, 64, 66.

Example 14: The module frame 24 of example 13, wherein the partition member 30 is connected to and extends from at least one connecting beam 64 of the set of beams 60, 62, 64, 66 such that a partition member longitudinal axis 70 of the partition member 30 forms an angle 72 with a longitudinal connecting beam axle 74 of the connecting beam 64 such that the angle 72 is in the range of 60 - 120°, preferably in the range of 80 - 100°.

Example 15: The module frame 24 of example 13 or example 14, wherein the set of beams 60, 62, 64, 66 comprises four beams forming a rectangle enclosing each one of the first module frame area 32 and the second module frame area 34.

Example 16: The module frame 24 of example 15, when dependent on example 14, wherein the connecting beam 64 forms part of the four beams forming a rectangle.

Example 17: A battery module 22 comprising a module frame 24 according to one of the preceding examples, the battery module 22 further comprising a first cell stack 26 comprising two or more battery cells 26', 26" and a second cell stack 28 comprising two or more battery cells 28', 28", the first cell stack 26 being located in the first module frame area 32 and the second cell stack 28 being located in the second module frame area 34, the first cell stack 26 and the second cell stack 28 being separated by the partition member 30.

Example 18: The battery module 22 according to example 17, wherein the partition member 30 separates at least two battery cells 26', 26" of the first cell stack 26 from at least two battery cells 28', 28" of the second cell stack 28.

Example 19: The battery module 22 according to example 17 or example 18, when dependent on example 2, wherein each battery cell 26', 26" of the first cell stack 26 is associated with a maximum operation temperature, the solid phase to liquid phase change temperature being greater than the maximum operation temperature, preferably the solid phase to liquid phase change temperature being in a temperature range between the maximum operation temperature and 150°C.

Example 20: The battery module 22 according to example 17 or example 18, when dependent on example 3, wherein each battery cell of the first cell stack 26 is associated with a maximum operation temperature, the liquid phase to gas phase change temperature being greater than the maximum operation temperature, preferably the liquid phase to gas phase change temperature being in a temperature range between the maximum operation temperature and 150°C.

Example 21: A vehicle 10 comprising a module frame 24 of any one of examples 1 - 16 or a battery module 22 according to any one of examples 17 - 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A module frame (24) for a battery module (22), said module frame (24) being adapted to accommodate at least a first cell stack (26) comprising two or more battery cells (26', 26") and a second cell stack (28) comprising two or more battery cells (28', 28"), said module frame (24) comprising a partition member (30) adapted to at least partially partition said module frame (24) into a first module frame area (32), adapted to accommodate said first cell stack (26), and a second module frame area (34), adapted to accommodate said second cell stack (28), said partition member (30) comprising a partition member wall assembly (36) at least partially enclosing a closed partition member cavity (38), said module frame (24) comprising a heat absorbing agent (40) accommodated by said partition member cavity (38).

2. The module frame (24) of claim 1, wherein said heat absorbing agent (40) is adapted to undergo a phase change from solid state to liquid state at a solid phase to liquid phase change temperature of said heat absorbing agent (40), preferably said solid phase to liquid phase change temperature is in the range of 50°C - 150°C.

3. The module frame (24) of claim 1, wherein said heat absorbing agent (40) is adapted to undergo a phase change from liquid state to gas state at a liquid phase to gas phase change temperature of said heat absorbing agent (40), preferably said liquid phase to gas phase change temperature is in the range of 50°C - 150°C.

4. The module frame (24) of any one of the preceding claims, wherein said heat absorbing agent (40) comprises at least one of the following: a fluorinated liquid, a silicone oil, water, ethylene glycol and a hydrogel.

5. The module frame (24) of any one of the preceding claims, wherein said module frame (24) comprises a pressure relief valve (42) adapted to fluidly connect said partition member cavity (38) to the environment ambient of said partition member (30) when a pressure in said partition member cavity (38) exceeds a predetermined pressure.

6. The module frame (24) of any one of the preceding claims, wherein said partition member (30) comprises a partition member housing (44) at least partially enclosing said partition member cavity (38), preferably said partition member housing (44) comprises or is made of metal.

7. The module frame (24) of any one of the preceding claims, wherein said partition member wall assembly (36) at least partially delimits said closed partition member cavity (38).

8. The module frame (24) of any one of the preceding claims, wherein said partition member (30) forms part of a first delimiting assembly (56) delimiting said first module frame area (32), preferably said partition member (30) also forms part of a second delimiting assembly (58) delimiting said second module frame area (34).

9. The module frame (24) of any one of the preceding claims, wherein said module frame (24) comprises a set of beams (60, 62, 64, 66) delimiting an interior storage area of said module frame (24), said interior storage area comprising said first module frame area (32) and second module frame area (34), said partition member (30) being connected to and extending from at least one beam (64) of said set of beams (60, 62, 64, 66).

10. The module frame (24) of claim 9, wherein said partition member (30) is connected to and extends from at least one connecting beam (64) of said set of beams (60, 62, 64, 66) such that a partition member longitudinal axis (70) of said partition member (30) forms an angle (72) with a longitudinal connecting beam axle (74) of said connecting beam (64) such that said angle (72) is in the range of 60 - 120°, preferably in the range of 80 - 100°, preferably said set of beams (60, 62, 64, 66) comprises four beams forming a rectangle enclosing each one of said first module frame area (32) and said second module frame area (34), preferably said connecting beam (64) forms part of said four beams forming a rectangle.

11. A battery module (22) comprising a module frame (24) according to one of the preceding claims, said battery module (22) further comprising a first cell stack (26) comprising two or more battery cells (26', 26") and a second cell stack (28) comprising two or more battery cells (28', 28"), said first cell stack (26) being located in said first module frame area (32) and said second cell stack (28) being located in said second module frame area (34), said first cell stack (26) and said second cell stack (28) being separated by said partition member (30).

12. The battery module (22) according to claim 11, wherein said partition member (30) separates at least two battery cells (26', 26") of said first cell stack (26) from at least two battery cells (28', 28") of said second cell stack (28).

13. The battery module (22) according to claim 11 or claim 12, when dependent on claim 2, wherein each battery cell (26', 26") of said first cell stack (26) is associated with a maximum operation temperature, said solid phase to liquid phase change temperature being greater than said maximum operation temperature, preferably said solid phase to liquid phase change temperature being in a temperature range between said maximum operation temperature and 150°C.

14. The battery module (22) according to claim 11 or claim 12, when dependent on claim 3, wherein each battery cell of said first cell stack (26) is associated with a maximum operation temperature, said liquid phase to gas phase change temperature being greater than said maximum operation temperature, preferably said liquid phase to gas phase change temperature being in a temperature range between said maximum operation temperature and 150°C.

15. A vehicle (10) comprising a module frame (24) of any one of claims 1 - 10 or a battery module (22) according to any one of claims 11 - 14.
